# EUROPÄISCHE PATENTSCHRIFT

(11) **EP 1 262 708 B1**
(45) Veröffentlichungstag und Bekanntmachung des Hinweises auf die Patenterteilung: **20.08.2008**
(21) Anmeldenummer: 02010437.8
(22) Anmeldetag: 08.05.2002
(51) Int. Cl.: F16L 55/165

(54) **Verfahren zum Sanieren von Rohrleitungen**
Method for refurbishing pipelines
Procédé pour rénover des tuyaux

(30) Priorität: 10.05.2001 DE 10122565
(43) Veröffentlichungstag der Anmeldung: 04.12.2002
(73) Patentinhaber: UV Reline.tec GmbH & Co., 87437 Kempten (DE); Brandenburger, Werner Gerd Joachim, 82467 Garmisch-Partenkirchen (DE); Betz, Wilhelm Leo, 76887 Bad Bergzabern (DE); Allmann, Ludwig, 76857 Silz (DE)
(72) Erfinder: Noll, Christian, 68549 Ilvesheim (DE); Reutemann, Thomas, 87527 Sonthofen (DE)
(74) Vertreter: Kesselhut, Wolf

(56) Entgegenhaltungen:
- CH-A- 675 287
- DE-A- 19 817 413
- US-A- 5 925 409

## Beschreibung

Die Erfindung betrifft ein Verfahren zum Sanieren von Rohrleitungen durch Anbringen eines Liners mit großer Wandstärke im Innern des Rohres, wobei ein harzgetränkter Faserschlauch in die beschädigte Leitung eingeführt, an deren Innenwand angelegt und das Harz gehärtet wird.

Derartige Verfahren werden in der Praxis seit einiger Zeit zum Sanieren von erdverlegten Abwässerkanälen, Wasserleitungen und ähnlichen Rohrsystemen angewandt. Bei einer besonders eleganten Ausführungsform wird ein flexibler, mit lichthärtbarem Kunstharz getränkter Faserschlauch, der beidseitig zum Schutz gegen Verkleben und Beschädigung mit einer Kunststoffolie belegt ist, in das Rohr eingeführt. Anschließend wird er mit Hilfe von Druckluft aufgeblasen, so daß er sich an die Innenwand des Rohres anschmiegt. Schließlich wird eine Lichtquelle langsam durch das Innere des Rohres gezogen, so daß das Harz durch die auftreffenden Strahlen gehärtet wird. Dabei aktivieren die energiereichen Strahlen die im Harz enthaltenen Photoinitiatoren, die in Radikale zerfallen, welche dann die Polymerisation der ungesättigten Doppelbindungen des Harzes auslösen.

Ein solches Verfahren ist zum Beispiel in der EP-A 122 246 und in der DE-A 198 17 413 beschrieben. Es ist zur Herstellung von Linem mit üblichen Wandstärken in der Größenordnung von 10 mm und weniger geeignet. In manchen Fällen sind jedoch Auskleidungsrohre mit größerer Wanddicke erforderlich, insbesondere wenn die zu sanierende Rohrleitung einen großen Durchmesser aufweist oder einer hohen Belastung ausgesetzt ist. In diesem Fall müssen dann Faserschläuche eingesetzt werden, deren Wandstärke mehr als 10 mm beträgt. Es hat sich jedoch gezeigt, daß es bei so großen Wandstärken schwierig ist, eine vollständige Durchhärtung des Faserschlauches zu erreichen. Die von der Lichtquelle ausgesandten UV-Strahlen können die dicke Schicht nicht vollständig durchdringen, so dass an dem äusseren, der Lichtquelle abgewandten Bereich des Faserschlauches nicht genügend Photoinitiatoren aktiviert werden. Dies hat zur Folge, dass die zugrundegelegten mechanischen, physikalischen und chemischen Kennwerte des Liners zu niedrig werden, so dass z. B. die anliegende Last durch Grundwasser so hoch wird, dass Bruch eintritt.

Der Erfindung lag daher die Aufgabe zugrunde, ein Verfahren zu entwickeln, das die Herstellung von Linern mit grosser Wandstärke im Bereich von mehr als 10 mm, insbesondere von 12 bis 25 mm ermöglicht. Diese Aufgabe wird erfindungsgemäss dadurch gelöst, dass bei Einsatz von harzgetränkten Faserschläuchen mit einer Wandstärke von mehr als 10 mm ein Harz eingesetzt wird, das zusätzlich zu den Photoinitiatoren noch 0,3 bis 4,0 Gew.-% eines organischen Peroxids enthält, welches im Temperaturbereich von 40 bis 90 DEG C in Radikale zerfällt, und daß die Intensität, mit der das UV-Licht auf die Innenwand des Faserschlauches auftrifft, mindestens 800 Watt/m beträgt.

In der DE-A 198 17 413 wird zwar erwähnt, dass das Harz neben den Photoinitiatoren auch noch Peroxide enthalten kann, die bei erhöhten Temperaturen in Radikale zerfallen, es findet sich aber kein Hinweis darauf, dass es bei Anwendung spezieller Peroxide in bestimmten Mengen und Einsatz spezieller UV-Lichtquellen möglich wird, Liner mit hohen Wandstärken herzustellen.

Weiterhin beschreibt die in der DE-A 198 17 413 als Stand der Technik angeführte EP-A-0 023 634 ein Verfahren zur Herstellung von Formkörpern, bei dem ein Fasermaterial mit einem Harz getränkt wird, welches neben Photo-Initiatoren auch Peroxide enthält, die bei einer Temperatur oberhalb von 80 C° in Radikale zerfallen, so dass das Fasermaterial nach dem Tränken mit dem Harz durch Behandlung im Wärmeschrank bei 80°C eingedickt werden kann, ohne dass die Gefahr besteht, dass die Peroxide beim Eindicken des Harzes zerfallen, und das Material frühzeitig durchgehärtet wird.

Das Verfahren liefert ein lederartiges flexibles Halbzeug, welches sich gut verformen lässt, und nach dem Verformen durch Bestrahlung mit UV-Licht gezielt durchgehärtet werden kann.

Die CH-A-675 287 beschreibt ein Verfahren zum Sanieren von Rohrleitungen, bei dem ein mit UV-strahlungshärtbarem Harz getränkter Faserschlauch in ein Rohr eingeführt, der Schlauch zum Anlegen an die Rohrinnenwand mit Druckluft beaufschlagt, und anschließend eine UV-Lichtquelle durch das Rohr gezogen wird, um das Harz des Faserschlauchs zu härten. Die Schrift gibt keinen Hinweis darauf, Harz mit einem organischen Peroxid zu verwenden, das im Temperaturbereich von 40 bis 90°C in Radikale zerfällt, und bei einer Wandstärke des Faserschlauchs von mehr als 10 mm eine UV-Lichtintensität von mindestens 800 Watt/m² zum Aushärten des Harzes zu verwenden.

US 5,925,409 beschreibt ein Verfahren zum Sanieren von Rohrleitungen, bei dem ein mit Carbodiimid eingedicktes Harz auf die Innenseite eines Rohres aufgebracht und dort in Gegenwart eines Initiators ausgehärtet wird. Als Initiator wird hierbei Triganox 21 vorgeschlagen, das bei Temperaturen zwischen 40 und 90°C in Radikale zerfällt. Die Schrift gibt keinen Hinweis darauf, dem Harz zusätzlich zum organischen Peroxid einen UV-Initiator zuzufügen und Faserschläuche mit einer Dicke von mehr als 10 mm durch Bestrahlen mit UV-Licht mit einer Intensität von mindestens 800 Watt/m² zu härten.

Bei dem erfindungsgemässen Verfahren wird zunächst ein harzgetränkter Faserschlauch in das zu sanierende Rohr eingeführt. Der Schlauch besteht aus einem faserförmigen Verstärkungsmaterial, z. B. aus Glas- oder Synthesefasern, die vorzugsweise als Gewebe, daneben aber auch als Nadelvlies, als Matte oder als Filz vorliegen können. Der Faserschlauch ist mit einem lichthärtbaren Kunstharz getränkt, wobei als Harze insbesondere Lösungen von ungesättigten Polyesterharzen oder Vinylesterharzen in copolymerisierbaren Monomeren, z. B. Styrol oder Acrylaten in Frage kommen. Die Harze enthalten Photoinitiatoren, z.B. Acylphoshinoxide oder Bisacylphosphinoxide, die durch eingestrahltes Licht der Wellenlänge 300 bis 500 nm, insbesondere 350 bis 450 nm in Radikale zerfallen, welche die Polymerisation des Harzes auslösen. Zusätzlich enthält das Harz erfindungsgemäß 0,3 bis 4,0 Gew.%, vorzugsweise 1,0 bis 3,0 Gew.% eines organischen Peroxids, welches im Temperaturbereich von 40 bis 80°C, vorzugsweise von 50 bis 80°C in Radikale zerfällt. Geeignete Peroxide sind z.B. PERCADOX 16 mit einer Anspringtemperatur von 40°C und TRIGONOX 21 mit einer Anspringtemperatur von 60°C, die gegebenenfalls zusammen mit bei höheren Temperaturen zerfallenden Peroxiden, wie TRIGONOX C (alle von AKZO NOBEL) oder mit üblichen Cobaltbeschleunigern angewandt werden können. Um einen vorzeitigen Zerfall der Peroxide bei Normaltemperatur zu vermeiden, sollten die Harze Inhibitoren, wie 2,6- Di- tert.butyl- 4- methylphenol enthalten. Außerdem ist es zweckmäßig, die harzgetränkten Faserschläuche kühl zu lagern.

Der harzgetränkte Faserschlauch ist vorzugsweise beidseitig mit einer Schutzfolie belegt, beispielsweise aus Polyamid, Polyethylen oder Polyvinylchlorid, vorzugsweise mit einer Verbundfolie Polyamid/ Polyethylen. Die Innenfolie muß lichtdurchlässig sein, während die Aüßenfolie opak eingefärbt oder mit einer lichtundurchlässigen Folie, z.B. einer Aluminiumverbundfolie kaschiert sein kann.

Der harzgetränkte Faserschlauch, dessen Wandstärke mehr als 10 mm, vorzugsweise 12 bis 25 mm beträgt, kann z.B. durch Wickeln um einen aufblasbaren Dorn hergestellt werden, wie in der WO 95/ 04646 beschrieben. Es gibt grundsätzlich zwei Möglichkeiten, den Schlauch in das zu sanierende Rohr einzuführen: Entweder wird der Schlauch über einen Eingangsschacht in das Rohr eingebracht und mit Hilfe einer Zugvorrichtung von einem Ausgangsschacht her durch das Rohr durchgezogen, oder ein vorher wie ein flacher Strumpf umgestülpter Schlauch wird in das Rohr eingeführt und dort z.B. mittels Druckluft wieder zurückgestülpt und vorgetrieben.

Nach dem erfindungsgemäßen Verfahren können Rohre mit einem Durchmesser von mehr als 500 mm, insbesondere von 700 bis 1500 mm problemlos saniert werden; die Länge der sanierbaren Strecke kann 200 m oder mehr betragen.

Wenn der Schlauch in das Rohr eingezogen ist, wird der zu sanierende Rohrabschnitt beidseitig verschlossen und es wird Luft mit einem Druck von beispielsweise bis zu 0,5 bar eingeblasen, wodurch der Schlauch dicht an die Innenwand des Rohrs angepreßt wird.

Dann wird eine Lichtquelle durch das Rohr gezogen. Diese besteht aus mindestens zwei hintereinander angeordneten UV- Lampen mit einer Leistung von jeweils mindestens 400 Watt. Die geforderte Intensität des UV- Lichts kann entweder mit relativ vielen Lampen geringer Leistung oder mit wenigen Lampen hoher Leistung realisiert werden. Bevorzugt werden vier bis sechs Lampen mit einer Leistung von jeweils 800 bis 2000 Watt, insbesondere von 1000 bis 1500 Watt, angewandt. Die Lampen sind zweckmäßigerweise auf ein Gestell oder einen Schlitten montiert, die mit Distanzrollen versehen sind, welche eine konzentrische Position im Rohr gewährleisten. Die Lampen werden mittels eines Zugkabels langsam mit einer Geschwindigkeit, die in der Größenordnung von 0,1 bis 2,0 m/min, insbesondere von 0,2 bis 1,0 m/min liegt, durch das Rohr gezogen. Geeignete Lampen, die UV- Licht der Wellenlänge 350 bis 450 nm abstrahlen, werden z.B. von der Firma UV-Reline.tec oder der Firma Dr. Hönle hergestellt. Statt nur eine Lampe vorzusehen, die radial das UV- Licht auf die gesamte Innenwand des Schlauchs abstrahlt, können auch mehrere Lampen, jeweils mit einer Leistung von mindestens 400 Watt radial auf einem Kern angeordnet sein, die das UV- Licht jeweils nur auf einen Ausschnitt der Schlauchinnenwand abstrahlen. Die Intensität, mit der das UV- Licht auf der Innenwand des Faserschlauches auftrifft, beträgt erfindungsgemäß mindestens 800 Watt/m². Diese Intensität wird folgendermaßen eingestellt: In einem Laborversuch, in dem die Bestrahlung simuliert wird, werden an einem UV- Sensor Lampen unterschiedlicher Leistung und Anzahl vorbeigezogen, wobei der Abstand des Lampenzugs vom Sensor durch den Schlauchdurchmesser vorgegeben ist. Der Sensor mißt und integriert im Bereich von 320 bis 450 nm die Intensität des UV-Lichts. Die Anzahl und Leistung der Lampen für die praktische Durchführung der erfindungsgemäßen Rohrsanierung wird dann so gewählt, daß die entsprechende Intensität in dem gewünschten Bereich liegt. Dieser muß in jedem Fall oberhalb von 800 Watt/m² liegen, bevorzugt liegt er zwischen 1000 und 8000, insbesondere zwischen 1500 und 5000 Watt/m². Bei zu geringer Intensität erhält man auch bei sehr langsamem Durchziehen der Lampen keine ausreichende Aushärtung, bei zu hoher Intensität besteht die Gefahr der Überhitzung.

Die energiereiche Strahlung der UV- Lampen bewirkt - wie oben ausgeführt - den Zerfall der Photoinitiatoren. An der Stelle der Innenwand des Schlauchs, an der das Licht der ersten Lampe auftrifft, dringen die Strahlen zunächst nur in einen schmalen Randbereich des Schlauchs ein, wo die von zerfallenen Photoinitiatoren gebildeten Radikale die Polymerisation auslösen. Durch die zweite und gegebenenfalls weitere vorbeilaufende Lampen werden weitere Photoinitiatoren zum Zerfall angeregt und die Polymerisation geht weiter. Gleichzeitig dringt mehr UV- Licht in das innere des Faserschlauches ein und löst auch dort die Polymerisation aus. Die Polymerisation ist eine exotherme Reaktion, bei der Wärme frei wird. Diese Polymerisationswärme hat eine Temperaturerhöhung zur Folge, die sich langsam bis an den hinteren, der Lichtquelle abgewandten Randbereich des Schlauchs ausbreitet. Sobald die Temperatur in den Zerfallsbereich des Peroxids gekommen ist, bildet auch dieses Radikale, die wiederum eine Polymerisation, nun auch im hinteren Randbereich des Folien-schlauches auslösen. Dies ist wahrscheinlich die Erklärung dafür, daß bei dem erfindungsgemäßen Verfahren eine vollständige Durchhärtung auch dicker harzgetränkter Folienschläuche erhalten wird.

Es ist grundsätzlich auch möglich, im Anschluß an die mindestens zwei UV- Lampen noch eine IR- Strahlen aussendende Lampe vorzusehen, die eine zusätzliche Temperaturerhöhung im Schlauch bewirkt. Durch die Wärmeentwicklung, die durch die peroxidisch ausgelöste Polymerisation entsteht, kann die Temperatur im Schlauch sehr rasch auf über 150°C ansteigen und dadurch das Harz und insbesondere die Schutzfolien schädigen. Man muß deshalb dafür sorgen, daß keine allzu starke lokale Wärmeentwicklung auftritt. Dies kann durch Einstellung der optimalen Durchzugsgeschwindigkeit der Lampen geschehen: Bei zu langsamem Durchziehen kann sich eine zu starke Wärmentwicklung ergeben, bei zu schnellem Durchziehen erhält man keine vollständige Durchhärtung. Diese Steuerung geschieht zweckmäßigerweise dadurch, daß durch Infrarot- Sensoren, die an einer oder mehreren Lampen angebracht sind, die Temperatur an der Innenwand des Schlauchs gemessen und an einem Monitor angezeigt wird. Wird dabei eine vorgegebene Temperatur überschritten, dann erhöht man manuell die Geschwindigkeit der Lichtquelle, wird sie unterschritten, dann verringert man die Geschwindigkeit. Durch Laborversuche kann die optimale Temperatur ermittelt werden. Grundsätzlich kann die Steuerung der Geschwindigkeit auch automatisch, wie in EP- A 122 246 oder in DE- A 198 17 413 beschrieben, durchgeführt werden.

## Patentansprüche

1. Verfahren zum Sanieren von Rohrleitungen, wobei ein Liner mit einer großen Wandstärke im Innern des Rohres angebracht ist, durch
- Einführen eines Faserschlauches, der mit einem härtbaren Harz getränkt ist, welches einen UV-Initiator und ein organisches Peroxid enthält, in das Rohr,
- Aufblasen des Schlauches mit Druckluft, so dass er sich an die Innenwand des Rohres anschmiegt,
- Durchziehen einer UV-Lichtquelle durch das Rohr, und
- Abstrahlen von UV-Licht von der Lichtquelle auf den Faserschlauch, wodurch das Harz gehärtet wird,
**dadurch gekennzeichnet,**
- **dass** der Faserschlauch eine Wandstärke von mehr als 10 mm aufweist,
- **dass** das Harz 0,3 bis 4,0 Gew.% eines organischen Peroxids enthält, das im Temperaturbereich von 40 bis 80 °C in Radikale zerfällt und bei diesen Temperaturen eine Polymerisation des Harzes auslöst,
- **dass** die UV-Lichtquelle aus mindestens 2 hintereinander angeordneten UV-Lampen mit einer Leistung von mindestens 400 Watt besteht, und
- **dass** die Intensität, mit der das UV- Licht auf die Innenwand des Faserschlauches auftrifft, mindestens 800 Watt/m² beträgt.

2. Verfahren nach Anspruch 1,
**dadurch gekenn zeichnet,**
**dass** der Faserschlauch eine Wandsträrke von mehr als 12 mm aufweist.

## Claims

1. Method for rehabilitating pipelines, a liner with a high wall thickness being applied to the inside of the pipe by
- inserting a fibre tube, which is soaked with a hardenable resin containing a UV initiator and an organic peroxide, into the pipe,
- inflating the tube with pressurised air in such a way that said tube presses tightly against the inner wall of the pipe,
- pulling a UV light source through the tube, and
- radiating UV light from the light source onto the fibre tube, causing the resin to harden,
**characterised in that**
- the fibre tube has a wall thickness of more than 10 mm,
- the resin contains 0.3 to 4.0 % by weight of an organic peroxide, which breaks down into radicals at a temperature of 40 to 80 °C and initiates polymerisation of the resin at these temperatures,
- the UV light source consists of at least 2 UV lamps, arranged one behind the other, with a wattage of at least 400 W, and
- the intensity at which the UV light is incident on the inner wall of the fibre tube is at least 800 W/m².

2. Method according to claim 1, **characterised in that** the fibre tube has a wall thickness of more than 12 mm.

## Revendications

1. Procédé pour rénover des conduites tubulaires, un revêtement d'une grande épaisseur de paroi étant placé à l'intérieur du tube, par
- introduction dans le tube d'un tuyau en fibre imprégné d'une résine durcissable contenant un initiateur UV et un peroxyde organique,
- insufflation du tuyau avec de l'air comprimé, de sorte qu'il s'adapte à la paroi intérieure du tube,
- passage d'une source de lumière UV à travers le tube, et
- rayonnement de lumière UV par la source de lumière sur le tuyau en fibre, ce qui permet de faire durcir la résine,
**caractérisé en ce**
- **que** le tuyau en fibre présente une épaisseur de paroi de plus de 10 mm,
- en ce que la résine contient 0,3 à 4% en poids d'un peroxyde organique qui se décompose en radicaux dans la plage de température de 40 à 80°C et, à ces températures, déclenche une polymérisation de la résine,
- en ce que la source de lumière UV est constituée d'au moins deux lampes UV disposées l'une derrière l'autre, ayant une puissance d'au moins 400 Watts, et
- en ce que l'intensité avec laquelle la lumière UV arrive sur la paroi intérieure du tuyau en fibre est d'au moins 800 Watts/m².

2. Procédé selon la revendication 1,
**caractérisé en ce**
**que** le tuyau en fibre présente une épaisseur de paroi de plus de 12 mm.
